# EUROPÄISCHE PATENTSCHRIFT

(11) **EP 1 274 616 B1**
(45) Veröffentlichungstag und Bekanntmachung des Hinweises auf die Patenterteilung: **19.11.2003**
(21) Anmeldenummer: 01929547.6
(22) Anmeldetag: 11.04.2001
(51) Int. Cl.: B60T 8/32, B60T 13/72

(54) **UNTERDRUCKBREMSKRAFTVERSTÄRKER MIT MECHANISCHER NOTBREMSHILFE**
VACUUM BRAKE BOOSTER WITH MECHANICAL EMERGENCY BRAKE BOOST
AMPLIFICATEUR DE FORCE DE FREINAGE A DEPRESSION AVEC ASSISTANCE MECANIQUE AU FREINAGE D'URGENCE

(30) Priorität: 19.04.2000 DE 10019423
(43) Veröffentlichungstag der Anmeldung: 15.01.2003
(73) Patentinhaber: LUCAS AUTOMOTIVE GMBH, 56070 KOBLENZ (DE)
(72) Erfinder: SCHLÜTER, Peter, 56206 Kammerforst (DE)
(74) Vertreter: Beyer, Andreas, Dr.
(86) Internationale Anmeldenummer: EP0104190
(87) Internationale Veröffentlichungsnummer: WO01081141

(56) Entgegenhaltungen:
- DE-A- 19 831 961
- DE-A- 19 831 962
- DE-A- 19 841 150

## Beschreibung

Die Erfindung betrifft einen Unterdruckbremskraftverstärker mit einer Unterdruckkammer und einer davon durch eine bewegliche Wand getrennten Arbeitskammer, einem Steuerventil, das ein mit der beweglichen Wand kraftübertragend gekoppeltes Gehäuse aufweist und das zur Erzielung einer Druckdifferenz an der beweglichen Wand die Zufuhr von Atmosphärendruck oder Überdruck zur Arbeitskammer in Abhängigkeit von der Verschiebung eines Eingangsgliedes des Bremskraftverstärkers zu steuern vermag, einer Fühlscheibe, die innerhalb des Steuerventilgehäuses axial verschieblich angeordnet ist, und einer Kopplungseinrichtung, die entgegen der Betätigungsvorrichtung auf die Fühlscheibe wirkende Kräfte in einer gekoppelten Stellung in das Steuerventilgehäuse und in einer entkoppelten Stellung über einen Betätigungskolben in das Eingangsglied einleitet, wobei die Kopplungseinrichtung ein Kopplungselement zur Einleitung der entgegen der Betätigungsrichtung wirkenden Kräfte in das Steuerventilgehäuse sowie ein axial verschiebliches Betätigungselement umfaßt.

Unterdruckbremskraftverstärker sind seit langem bekannt und befinden sich millionenfach im Einsatz, um die Betätigungskräfte einer hydraulischen Fahrzeugbremsanlage zu unterstützen und dadurch auf einem für den Fahrer eines Fahrzeuges angenehmen Niveau zu halten. Ebenfalls bekannt sind sogenannte Notbremshilfen, die häufig auch als "Bremsassistenten" bezeichnet werden. Es handelt sich dabei um Einrichtungen, die einem Fahrer im Fall einer Notbremsung bei im wesentlichen gleicher Betätigungskraft eine erhöhte Bremsleistung zu Verfügung stellen.

Notbremshilfen lassen sich in elektromagnetisch betätigte und mechanisch betätigte Systeme unterscheiden. Aus Kostengründen wird für Anwendungen in preiswerteren Fahrzeugen der Einsatz eines mechanischen Systems angestrebt.

Ein Unterdruckbremskraftverstärker mit einer derartigen mechanischen Notbremshilfe ist beispielsweise aus der DE 198 31 962 A1 bekannt. Dieser Unterdruckbremskraftverstärker besitzt eine Unterdruckkammer und eine davon durch eine bewegliche Wand druckdicht getrennte Arbeitskammer. Ein Steuerventil, welches ein mit der beweglichen Wand kraftübertragend gekoppeltes Gehäuse aufweist, umfaßt einen Atmosphären-Ventilsitz, der zur Erzielung einer Druckdifferenz an der beweglichen Wand die Zufuhr von Atmosphärendruck zur Arbeitskammer in Abhängigkeit von der Verschiebung eines Eingangsgliedes des Bremskraftverstärkers zu steuern vermag.

Das Eingangsglied ist in Betätigungsrichtung mit einem Betätigungskolben gekoppelt. Mit "Betätigungsrichtung" ist im Rahmen der vorliegenden Erfindung immer die Betätigungsrichtung des Bremskraftverstärkers gemeint. In Betätigungsrichtung hinter dem Betätigungskolben ist eine mit der Reaktionsscheibe eines Kraftabgabegliedes zusammenwirkende Fühlscheibe angeordnet. Diese axial verschiebliche Fühlscheibe gestattet die Übertragung einer Kraft vom und zum Betätigungskolben.

Zur besseren Bremskraftunterstützung bei Notbremsungen ist in dem Steuerventilgehäuse eine mechanische Notbremshilfe angeordnet. Die Notbremshilfe umfaßt eine Kopplungseinrichtung, die entgegen der Betätigungsrichtung auf die Fühlscheibe wirkende Rückwirkkräfte des Hauptbremszylinders in einer gekoppelten Stellung in das Steuerventilgehäuse und in einer entkoppelten Stellung über den Betätigungskolben in das Eingangsglied einleitet. In einer Notbremssituation nimmt die Kopplungseinrichtung die Koppelungsstellung ein, so daß die Rückwirkkräfte des Hauptbremszylinders in das Steuerventilgehäuse eingeleitet werden und die vom Fahrer aufzubringende, über das Eingangsglied in den Bremskraftverstärker eingeleitete Haltekraft um die Rückwirkkräfte verringert ist. Zum Aufrechterhalten des Bremsdruckes muß vom Fahrer dann nur noch eine relativ geringe Betätigungskraft aufgebracht werden.

Die Kopplungseinrichtung gemäß der DE 198 31 961 A1 umfaßt ein Kopplungselement mit zwei radial nach außen verlagerbaren, mit Schrägflächen versehenen Hälften, die mit korrespondierenden Schrägflächen eines axial verschieblichen Betätigungselementes zusammenwirken, um ein Verschieben der Kupplungselementhälften radial nach außen zu bewirken. In gekoppeltem Zustand hintergreifen die verschobenen Kopplungselementhälften einen Anschlag des Steuerventilgehäuses, so daß entgegen der Betätigungsrichtung auf die Fühlscheibe wirkende Rückwirkkräfte von der Fühlscheibe auf die Kopplungselementhälften und von diesen auf das Steuerventilgehäuse übertragen werden.

Der Erfindung liegt die Aufgabe zugrunde, einen Bremskraftverstärker mit mechanischer Notbremshilfe anzugeben, welcher einen anderen Aufbau aufweist.

Ausgehend von einem Bremskraftverstärker der eingangs beschriebenen Art ist die Aufgabe erfindungsgemäß dadurch gelöst, daß die Kopplungseinrichtung ein in radialer Richtung bewegliches und radial außen bezüglich des Kopplungselementes angeordnetes Rastelement aufweist und das Kopplungselement radial außen einen Anschlag für das Rastelement besitzt, wobei in der gekoppelten Stellung die entgegen der Betätigungsrichtung wirkenden Kräfte vom Kopplungselement über den Anschlag und das Rastelement in das Steuerventilgehäuse eingeleitet werden.

Die vorstehenden und alle nachfolgenden Bezugnahmen auf radiale Positionen und Richtungen beziehen sich auf eine Längsachse des Steuerventilgehäuses und haben keinen Aussagegehalt bezüglich der Gestalt der einzelnen Komponenten der Kopplungseinrichtung. Die einzelnen Komponenten der Kopplungseinrichtung sind zwar vorzugsweise, nicht jedoch notwendigerweise z.B. ringförmig, zylindrisch oder hohlzylindrisch ausgestaltet.

Erfindungsgemäß entscheidet die radiale und axiale Position des Rastelementes relativ zum Kopplungselement darüber, ob sich die Kopplungseinrichtung in einer gekoppelten oder einer entkoppelten Stellung befindet. Befindet sich das Rastelement relativ zum Kopplungselement beispielsweise so weit radial innen bzw. in einer solchen axialen Position, daß es in Anlage mit dem Anschlag des Kopplungselementes gelangt (Rastposition), so ist die Kopplungseinrichtung in einer gekoppelten Stellung und die in das Kopplungselement eingeleiteten Rückwirkkräfte vom Hauptbremszylinder werden vom Kopplungselement auf den Anschlag, vom Anschlag auf das Rastelement und vom Rastelement auf das Steuerventilgehäuse übertragen. In den Betätigungskolben und das Eingangsglied hingegen werden dann keine Rückwirkkräfte eingeleitet.

Befindet sich das Rastelement hingegen relativ zum Kopplungselement beispielsweise so weit radial außen bzw. in einer solchen axialen Position, daß es nicht in Anlage mit dem Anschlag des Kopplungselementes ist, kann sich das Kopplungselement nicht am Steuerventilgehäuse abstützen und die Rückwirkkräfte des Hauptbremszylinders werden über die Fühlscheibe und die Kopplungseinrichtung auf den Betätigungskolben und von diesem auf das Eingangsglied übertragen. Die Kopplungseinrichtung befindet sich dabei in einer entkoppelten Stellung.

Bevorzugt ist nicht nur das Rastelement, sondern auch das Kopplungselement in radialer Richtung beweglich, so daß eine radiale Bewegung des Kopplungselementes auf das Rastelement, welches das Kopplungselement radial außen umgibt, übertragbar ist. Durch eine Verschiebung des Kopplungselementes radial nach außen kann das Kopplungselement dann beispielsweise in reibschlüssigen Kontakt mit dem Rastelement gebracht werden, so daß auch eine axiale Bewegung des radial nach außen bewegten Kopplungselementes auf das Rastelement übertragen werden kann.

Um das Kopplungselement in radialer Richtung zu bewegen, kann beispielsweise eine axiale Bewegung relativ zum Betätigungselement ausgenutzt werden. Zu diesem Zweck ist das Betätigungselement beispielsweise mit Schrägflächen versehen, welche bei einer Relativbewegung zwischen Betätigungselement und Kopplungselement mit dem Kopplungselement derart zusammenwirken, daß das Kopplungselement radial nach außen bewegt wird. Ein derart ausgestaltetes Betätigungselement weist vorzugsweise Schräg in Form eines konischen Abschnittes mit in Betätigungsrichtung zunehmendem Durchmesser auf und ist in Betätigungsrichtung hinter dem Kopplungselement und vor der Fühlscheibe angeordnet. Besonders bevorzugt besitzt das Betätigungselement radial außen einen Anschlag für das Kopplungselement, um zu verhindern, daß Betätigungselement und Kopplungselement zu weit relativ zueinander verschoben werden.

Gemäß einer bevorzugten Ausführungsform sind Kopplungselement und/oder Rastelement im wesentlichen ringförmig ausgestaltet. Das Kopplungselement kann beispielsweise ein radial nach innen vorgespannter oder vorspannbarer Spannring sein, welcher in seiner Ausgangsstellung z.B. form- und/oder kraftschlüssig mit dem Betätigungskolben verbunden ist. Vorzugsweise weist der Betätigungskolben einen Anschlag für das Kopplungselement auf, damit letzteres nicht zu weit bezüglich des Betätigungskolbens entgegen der Betätigungsrichtung verschoben werden kann. Auch das Rastelement kann derart ausgestaltet sein, daß es radial nach innen vorgespannt oder vorspannbar ist. Dadurch wird gewährleistet, daß das Rastelement nach dem Zusammenwirken mit dem Kopplungselement wieder selbsttätig seine radiale Ausgangsposition einnehmen kann.

Gemäß einer besonders bevorzugten Ausführungsform ist der für das Rastelement vorgesehene Anschlag des Kopplungselementes als eine Stufe mit in Betätigungsrichtung zunehmender radialer Erstreckung ausgestaltet und an einem dem Eingangsglied zugewandten Ende des Kopplungselementes ausgebildet. Zusätzlich zu diesem z.B. als Stufe ausgebildeten Anschlag des Kopplungselements kann für das Rastelement entgegen der Betätigungsrichtung ein weiterer Anschlag z.B. in Gestalt einer Stufe im Steuerventilgehäuse vorgesehen sein. Das Rastelement ist vorzugsweise entgegen der Betätigungsrichtung in Richtung auf den Anschlag im Steuerventilgehäuse vorgespannt.

Die Kopplungseinrichtung kann weiterhin eine Halterung für das Rastelement umfassen, welche radial außerhalb bezüglich des Rastelementes angeordnet ist. Die Halterung ist vorzugsweise radial innen mit einer Nut versehen, in der das Rastelement führbar ist. Weiterhin ist es möglich, die Halterung in axialer Richtung beweglich auszugestalten, so daß das in der Nut aufgenommene Rastelement von der Halterung in axialer Richtung mitgenommen werden kann. Im Falle einer beispielsweise reib- oder kraftschlüssigen Verbindung zwischen dem Kopplungselement und dem Rastelement kann die Halterung somit einer axialen Verschiebung des Kopplungselementes folgen.

Die Halterung kann entgegen der Betätigungsrichtung beispielsweise in Richtung auf einen Anschlag im Steuerventilgehäuse vorgespannt sein. Auf diese Weise wird gewährleistet, daß nach einer axialen Verschiebung der Halterung diese im Anschluß an das Lösen der Verbindung zwischen Rastelement und Kopplungselement wieder in ihre axiale Ausgangsstellung zurückkehrt.

Ein bevorzugtes Ausführungsbeispiel der Erfindung wird mit weiteren Einzelheiten und Vorteilen anhand der beigefügten, schematischen Figuren näher erläutert. Es zeigen:
- Fig. 1: einen Längsschnitt durch das Steuerventil eines erfindungsgemäßen Unterdruckbremskraftverstärkers in Bereitschaftsstellung;
- Fig. 2: einen Längsschnitt durch das Steuerventil gemäß Fig. 1 bei einer Normalbremsung;
- Fig. 3: einen Längsschnitt durch das Steuerventil gemäß Fig. 1 bei einer Normalbremsung nach Überschreiten des Aussteuerdrucks; und
- Fig. 4: einen Längsschnitt durch das Steuerventil gemäß Fig. 1 mit aktivierter Notbremshilfe.

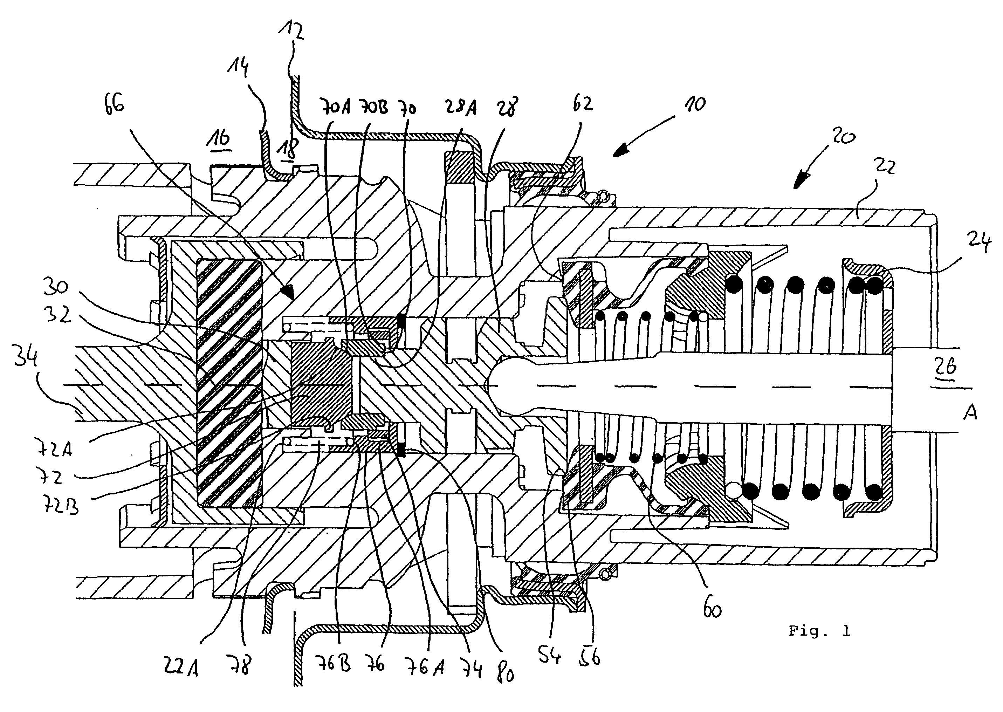

In Fig. 1 ist ein Unterdruckbremskraftverstärker 10 mit einem Gehäuse 12 gezeigt, in dem eine bewegliche Wand 14 eine Unterdruckkammer 16 druckdicht von einer Arbeitskammer 18 trennt.

Die Unterdruckkammer 16 steht im Betrieb des Bremskraftverstärkers 10 ständig mit einer Unterdruckquelle in Verbindung, beispielsweise mit dem Ansaugtrakt eines Verbrennungsmotors oder mit einer Unterdruckpumpe. Ein Steuerventil 20 mit einem Gehäuse 22 kann wahlweise die Arbeitskammer 18 mit der Unterdruckkammer 16 verbinden, um die Arbeitskammer 18 zu evakuieren, oder die evakuierte Arbeitskammer 18 mit der Umgebungsatmosphäre, d.h. dem Umgebungsdruck, verbinden, um eine Druckdifferenz an der beweglichen Wand 14 zu erzeugen. Die bewegliche Wand 14 ist kraftübertragend mit dem Steuerventilgehäuse 22 gekoppelt.

Der Bremskraftverstärker 10 wird mittels eines stangenförmigen, von einer Feder 24 in seine Ausgangsstellung vorgespannten Eingangsgliedes 26 betätigt, das längs einer Achse A in das Steuerventilgehäuse 22 ragt und mit seinem einen, kugelig ausgeführten Ende in einem Betätigungskolben 28 befestigt ist.

Das dem kugelig ausgeführten Ende des Eingangsgliedes 26 gegenüberliegende Ende des Betätigungskolbens 28 steht über eine weiter unten näher beschriebene Kopplungseinrichtung 66 in Kontakt mit einer Fühlscheibe 30, die eine über das Eingangsglied 26 in den Bremskraftverstärker 10 eingeleitete Betätigungskraft über eine Reaktionsscheibe 32 aus Elastomermaterial auf einen Reaktionskolben 34 eines dem Bremskraftverstärker 10 funktionell nachgeschalteten, hier nicht gezeigten Hauptzylinders einer hydraulischen Fahrzeugbremsanlage überträgt. Die Reaktionsscheibe 33 führt die vom Fahrer aufgebrachte Betätigungskraft sowie die Verstärkerkraft zusammen.

An seinem dem Eingangsglied 26 zugewandten Ende des Betätigungskolbens 28 ist ein erster, ringförmiger Ventilsitz 54 des Steuerventils 20 angeformt. Der erste Ventilsitz 54 wirkt mit einem über eine Feder 60 gegen ihn vorgespannten, ebenfalls ringförmigen Ventildichtglied 56 zusammen und kann die Verbindung zwischen der Umgebungsatmosphäre und der Arbeitskammer 18 des Bremskraftverstärkers 10 steuern. Radial außerhalb des ersten Ventilsitzes 54 und konzentrisch zu diesem ist innen am Steuerventilgehäuse 22 ein zweiter ringförmiger Ventilsitz 62 des Steuerventils 20 ausgebildet, der ebenfalls mit dem Ventildichtglied 56 zusammenwirkt und der die Verbindung zwischen der Unterdruckkammer 16 und der Arbeitskammer 18 des Bremskraftverstärkers 10 steuern kann.

In Betätigungsrichtung hinter dem Betätigungskolben 28 ist eine Kopplungseinrichtung 66 in einer Bereitschaftsstellung, in welcher der Fahrer keine Betätigungskraft in den Bremskraftverstärker einleitet, dargestellt. Aus dieser Bereitschaftsstellung heraus kann die Kopplungseinrichtung in Abhängigkeit von der Betätigungsgeschwindigkeit in eine gekoppelte Stellung bewegt werden.

Die in Fig. 1 in einer Bereitschaftsstellung dargestellte Kopplungseinrichtung 66 umfaßt ein Kopplungselement in Gestalt eines Spannringes 70, welcher mit einem ihm in Betätigungsrichtung vorgelagerten, als konisches Bauteil 72 ausgestalteten Betätigungselement zusammenwirkt.

Der Spannring 70 kann sich bezüglich der Gehäuselängsachse A in radialer Richtung aufweiten und ist zu diesem Zweck mit einem nicht dargestellten, axialen Schlitz versehen. In der in Fig. 1 dargestellten Bereitschaftsstellung ist der Spannring 70 kraftund formschlüssig mit einer Stufe 28A des Betätigungskolbens verbunden. Die Stufe 28A ist an einem der Unterdruckkammer 16 zugewandten Ende des Betätigungskolbens 28 ausgebildet und weist einen in Betätigungsrichtung abnehmenden Durchmesser auf.

An seinem dem konischen Bauteil 72 zugewandten Ende weist der Spannring 70 eine mit dem konischen Abschnitt 72A des konischen Bauteils 72 zusammenwirkenden, abgeflachten Abschnitt 70A auf. An seinem anderen, dem Eingangsglied 26 zugewandten Ende besitzt der Spannring 70 einen Anschlag in Gestalt einer Stufe 70B für ein den Spannring radial außen umgebendes Rastelement in Gestalt eines metallischen Rastringes 74. Wie der Spannring 70 kann auch der Rastring 74 radial nach außen aufgedehnt werden.

In der in Fig. 1 dargestellten Bereitschaftsstellung ist die axiale Position des Rastringes 74 relativ zum Spannring 70 derart gewählt, daß der Rastring 74 sich radial außen bezüglich des Spannringes 70 in Anlage mit demjenigen Bereich des Spannringes 70 befindet, welcher den größten Außendurchmesser aufweist. Dies bedeutet, daß der Rastring 74 in der Bereitschaftsstellung sich zwar in Anlage mit dem Spannring 70 befindet, nicht aber in die Stufe des Spannringes 70 eingerastet ist.

Das Rastelement 74 ist radial verschieblich innerhalb einer Nut 76A einer Halterung 76 geführt. Die Halterung 76 wiederum ist axial verschieblich innerhalb des Steuerventilgehäuses 22 geführt und wird von einem elastischen Element in Gestalt einer Rückstellfeder 78 entgegen der Betätigungsrichtung gegen einen im Steuerventilgehäuse 22 befestigten, ringförmigen Anschlag 80 vorgespannt. Die Rückstellfeder 78 stützt sich mit ihrem einen Ende in einer Ausnehmung 22A des Steuerventilgehäuses 22 und mit ihrem anderen Ende an einem Anschlag 76B der Halterung 76 ab.

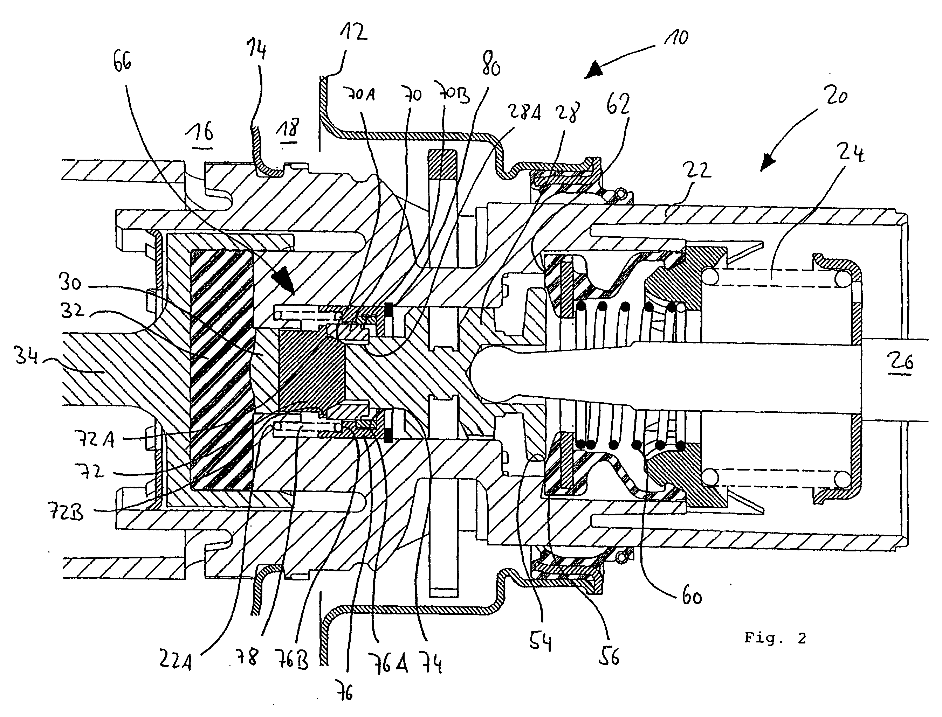

Der erste Ventilsitz 54 des Steuerventils 20 wird bei einer Betätigung des Bremskraftverstärkers 10 in Abhängigkeit von der Verschiebung des Eingangsgliedes 26 relativ zum Steuerventilgehäuse 22 mehr oder weniger weit geöffnet, wodurch sich eine entsprechende Unterstützungskraft des Bremskraftverstärkers 10 ergibt, die aus der aktuell an der beweglichen Wand 14 wirkenden Druckdifferenz resultiert. Eine solche Betriebsstellung des Bremskraftverstärkers 10 mit infolge einer normalen Bremsbetätigung etwas geöffnetem Ventilsitz 54 ist in Fig. 2 dargestellt.

Auf die bei einer Normalbremsung vergleichsweise langsame Betätigungsgeschwindigkeit des Eingangsgliedes 26 und des mit dem Eingangsglied 26 gekoppelten Betätigungskolbens 28 reagiert der Hauptbremszylinder mit einer zunehmend höheren Rückwirkkraft, welche über den Reaktionskolben 34, die Reaktionsscheibe 32 und die Fühlscheibe 30 auf das konische Bauteil 72 übertragen wird. Aufgrund dieser Kräftekonstellation wird der zwischen dem Betätigungskolben 28 und dem konischen Bauteil 72 angeordnete Spannring 70 in Richtung auf das konische Bauteil 72 verschoben. Gleichzeitig wirken die schrägen Flächen 70A des Spannringes 70 mit dem konischen Abschnitt 72A des konischen Bauteils 72 derart zusammen, daß sich der Spannring 70 radial nach außen verformt. Die radiale Verformung des Spannrings 70 wird dadurch begrenzt, daß der Betätigungskolben 28 in Anlage mit einer dem Eingangsglied 26 zugewandten Stirnseite des konischen Bauteiles 72 gelangt bzw. der Spannring 70 in Anlage mit einem an den Außendurchmesser des konischen Bauteiles 72 angeformten Anschlag 72B gelangt.

Die Bewegung des Spannringes 70 radial nach außen ist entlang einer der Unterdruckkammer 16 zugewandten Stirnfläche der Stufe 28A des Betätigungskolbens 28 geführt. Gleichzeitig wird durch diese Stirnfläche der Stufe 28A der Spannring 70 axial in Betätigungsrichtung verschoben. Der Spannring 70 wird bei einer Normalbremsung jedoch relativ zum Rastring 74 nicht so weit verschoben, daß der Rastring 74 formschlüssig in den Absatz 70B des Spannringes 70 einrasten kann.

Von der Bewegung des Spannringes 70 radial nach außen wird auch der sich in Anlage mit dem Außendurchmesser des Spannringes 70 befindende Rastring 74 erfaßt. Der Rastring 74 wird dabei innerhalb der Nut 76A der Halterung 76 radial nach außen verschoben.

In der in Fig. 2 dargestellten Betätigungsstellung des Bremskraftverstärkers 10 befindet sich die Kopplungseinrichtung in einer entkoppelten Stellung, da die eingangs erwähnten Rückwirkkräfte des Hauptbremszylinders auf das konische Bauteil 72, von diesem auf den Betätigungskolben 28 und vom Betätigungskolben 28 auf das Eingangsglied 26 übertragen werden. In Ermangelung einer Kopplung von Rastelement 74 und Spannring 70 entgegen der Betätigungsrichtung werden keine Rückwirkkräfte in das Steuerventilgehäuse 22 eingeleitet.

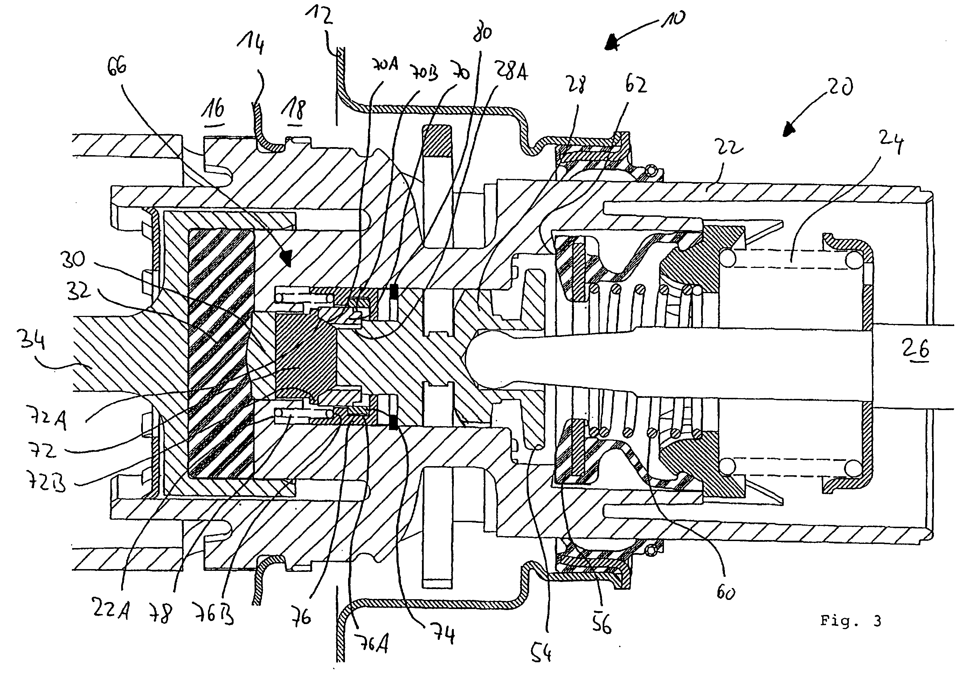

Wird aus der in Fig. 2 dargestellten Betriebsstellung des Bremskraftverstärkers die Betätigungskraft weiter erhöht, so kann der Fall auftreten, daß die Aussteuerstellung, in der die maximal mögliche Druckdifferenz an der beweglichen Wand 14 erreicht ist, überschritten wird. Der Bremskraftverstärker 10 befindet sich dann in der in Fig. 3 dargestellten Betriebsstellung, in welcher der Betätigungskolben 28 noch weiter in Betätigungsrichtung verschoben und der Ventilsitz 54 noch weiter geöffnet ist.

Bei der in Fig. 3 dargestellten Betriebsstellung des Bremskraftverstärkers 10 hat sich aufgrund der Ausdehnung des Spannrings 70 radial nach außen dieser mit dem Rastring 74 reibschlüssig verklemmt. Die Halterung 76 ist folglich in axialer Richtung über den Rastring 74 und den Spannring 70 mit dem Betätigungskolben 28 gekoppelt. Eine weitere Erhöhung der vom Fahrer aufgebrachten Betätigungskraft führt nun dazu, daß die Halterung 76 von einer Bewegung des Betätigungskolbens 28 in Betätigungsrichtung erfaßt und gegen die Rückstellfeder 78 verschoben wird.

Durch die Kopplung des innerhalb der Haltung 76 angeordneten Rastringes 74 in Betätigungsrichtung mit dem Spannring 70 wird vermieden, daß sich der Spannring 70 relativ zum Rastring 74 in Betätigungsrichtung verschiebt. Folglich wird ein formschlüssiges Einrasten der Halterung 74 in die Stufe 70B, welches gemäß der nachstehenden Ausführungen mit einer unerwünschten Aktivierung der Kopplungseinrichtung einhergehen würde, verhindert. Auch in der in Fig. 3 dargestellten Betriebsstellung des Bremskraftverstärkers 10 bleibt die Kopplungseinrichtung 66 somit entkoppelt und die auf das konische Bauteil 72 wirkenden Rückwirkkräfte des Hauptbremszylinders werden vollständig in den Betätigungskolben 28 eingeleitet.

Zum Lösen der Bremse reicht eine Zurücknahme der vom Fahrer aufgebrachten Betätigungskraft aus. Das Eingangsglied 26 und der Betätigungskolben 28 werden von der Rückstellfeder 24 dann entgegen der Betätigungsrichtung in ihre Ausgangsstellung verschoben. Weiterhin wird durch den Rückhub des an den Betätigungskolben 28 angeformten Ventilsitzes 54 das Ventildichtglied 56 vom Ventilsitz 62 abgehoben, so daß der übliche Druckausgleich an der beweglichen Wand 14 stattfinden kann.

Durch den Rückhub des Betätigungskolbens 28 verringert sich die vom konischen Bauteil 72 in den Spannring 70 eingeleitete Kraft, so daß sich der Spannring 70 radial nach innen bewegt. Gleichzeitig wird der Reibschluß zwischen dem Spannring 70 und dem Rastring 74 aufgehoben, und die Halterung 76 von der Rückstellfeder 78 wieder gegen den Anschlag 80 vorgespannt.

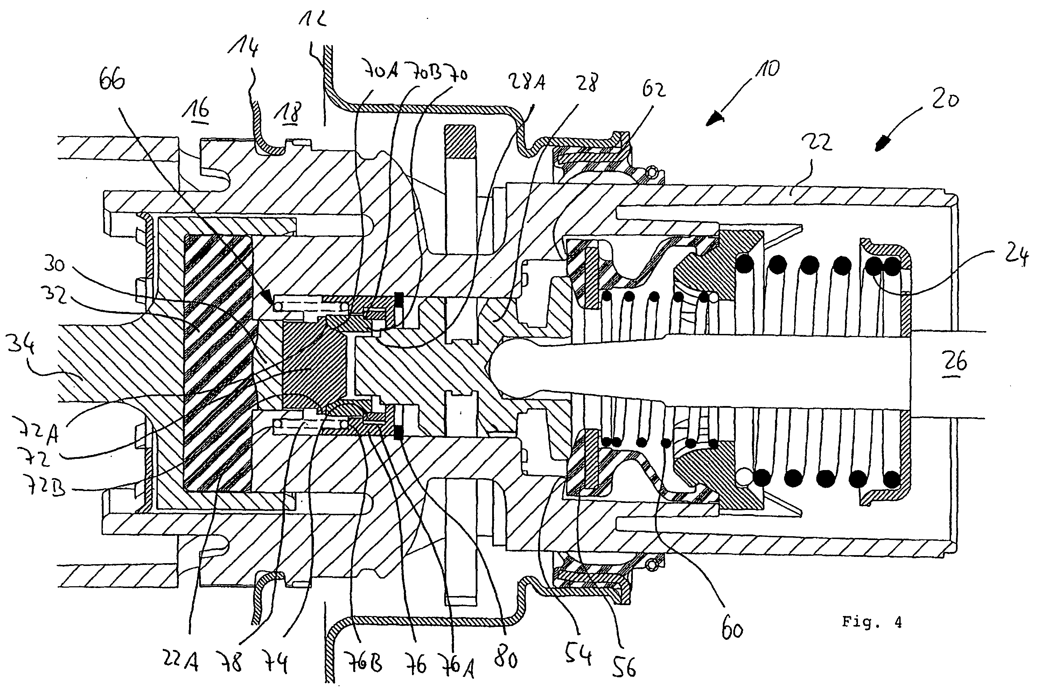

Erfolgt in einer Notbremssituation eine Betätigung des Eingangsgliedes 26 mit einer hohen Betätigungsgeschwindigkeit und vergleichsweise großem Hub, so wird der Spannring 70 zunächst axial in Betätigungsrichtung verschoben. Aufgrund der Relativverschiebung zwischen dem Spannring 70 und dem Rastring 74 kann der Rastring formschlüssig in die Stufe 70B des Spannringes 70 einrasten. Bei eingerastetem Rastring 74 befindet sich die Kopplungseinrichtung 66 in einer gekoppelten Stellung. Diese Betriebsstellung des Bremskraftverstärkers 10 ist in Fig. 4 dargestellt.

Nach dem Einrasten des Rastringes 74 in die Stufe 70B des Spannringes 70 können die auf das konische Bauteil 72 übertragenen Rückwirkkräfte des Hauptbremszylinders über den Anschlag 72B des konischen Bauteils 72, den Spannring 70, den Rastring 74, die Halterung 76 und den Anschlag 80 in das Steuerventilgehäuse 22 eingeleitet werden. Durch die Entlastung des Eingangsgliedes 26 von den Rückwirkkräften des Hauptbremszylinders verringert sich die vom Fahrer aufzubringende Betätigungskraft zur Aufrechterhaltung des Bremsdruckes, die Notbremshilfe ist aktiviert.

Erst nach oder kurz vor diesem Einrasten wird der Spannring 70 durch Zusammenwirken mit dem konischen Bauteil 72 radial nach außen aufweitet. Auch der Rastring 74, welcher sich formschlüssig in Anlage mit der Stufe 70B des Spannringes 70 befindet, wird von dieser radial nach außen gerichteten Bewegung des Spannringes 70 erfaßt. Der Rastring 74 wird folglich innerhalb der Nut 76A der Haltung der 76 radial nach außen verschoben.

Zum Lösen der Bremse reicht es wieder aus, die vom Fahrer aufgebrachte Betätigungskraft zu reduzieren, woraufhin das Eingangsglied 26 und der mit dem Eingangsglied 26 gekoppelte Betätigungskolben 28 von der Rückstellfeder 24 entgegen der Betätigungsrichtung verschoben werden.

Um die Kopplungseinrichtung 66 aus der gekoppelten Stellung wieder in die Bereitschaftsstellung zurückzuführen ist es notwendig, die entgegen der Betätigungsrichtung auf das konische Bauteil 72 wirkenden Kräfte soweit zu reduzieren, daß das konische Bauteil 72 in Betätigungsrichtung ausweichen kann. Das konische Bauteil 72 drückt sich daraufhin aus dem Spannring 70 heraus und die Kopplungseinrichtung 66 nimmt wieder die in Fig. 1 dargestellte Stellung ein.

## Patentansprüche

1. Bremskraftverstärker (10), mit
- einer Unterdruckkammer (16) und einer davon durch eine bewegliche Wand (14) getrennten Arbeitskammer (18),
- einem Steuerventil (20), das ein mit der beweglichen Wand (14) kraftübertragend gekoppeltes Gehäuse (22) aufweist und das zur Erzielung einer Druckdifferenz an der beweglichen Wand (14) die Zufuhr von Atmosphärendruck oder Überdruck zur Arbeitskammer (18) in Abhängigkeit von der Verschiebung eines Eingangsgliedes (26) des Bremskraftverstärkers (10) zu steuern vermag,
- einer Fühlscheibe (30), die innerhalb des Steuerventilgehäuses (22) axial verschieblich angeordnet ist, und
- einer Kopplungseinrichtung (66), die entgegen der Betätigungsrichtung des Bremskraftverstärkers auf die Fühlscheibe (30) wirkende Kräfte in einer gekoppelten Stellung in das Steuerventilgehäuse (22) und in einer entkoppelten Stellung über einen Betätigungskolben (28) in das Eingangsglied (26) einleitet, wobei die Kopplungseinrichtung (66) ein Kopplungselement (70) zur Einleitung der entgegen der Betätigungsrichtung wirkenden Kräfte in das Steuerventilgehäuse (22) und ein axial verschiebliches Betätigungselement (72) aufweist,
**dadurch gekennzeichnet, daß** die Kopplungseinrichtung (66) ein in radialer Richtung bewegliches und radial außerhalb bezüglich des Kopplungselementes (70) angeordnetes Rastelement (74) umfaßt und das Kopplungselement (70) radial außen einen Anschlag (70B) für das Rastelement (74) besitzt, wobei in der gekoppelten Stellung die entgegen der Betätigungsrichtung wirkenden Kräfte vom Kopplungselement (70) über dessen Anschlag (70B) und das Rastelement (74) in das Steuerventilgehäuse (22) eingeleitet werden.

2. Bremskraftverstärker nach Anspruch 1,
**dadurch gekennzeichnet, daß** das Kopplungselement (70) in radialer Richtung beweglich ist.

3. Bremskraftverstärker nach Anspruch 1 oder 2,
**dadurch gekennzeichnet, daß** das Betätigungselement (72) Schrägflächen (72A) aufweist und über diese Schrägflächen (72A) mit dem Kopplungselement (70) zusammenwirkt.

4. Bremskraftverstärker nach Anspruch 3,
**dadurch gekennzeichnet, daß** das Betätigungselement (72) einen konischen Abschnitt (72A) mit in Betätigungsrichtung zunehmendem Durchmesser aufweist und in Betätigungsrichtung hinter dem Kopplungselement (70) angeordnet ist.

5. Bremskraftverstärker nach Anspruch 3 oder 4,
**dadurch gekennzeichnet, daß** das Betätigungselement (72) in Betätigungsrichtung einen Anschlag (72B) für das Kopplungselement (70) aufweist.

6. Bremskraftverstärker nach einem der Ansprüche 1 bis 5,
**dadurch gekennzeichnet, daß** das Kopplungselement (70) eine im wesentlichen ringförminge Gestalt aufweist.

7. Bremskraftverstärker nach einem der Ansprüche 1 bis 6,
**dadurch gekennzeichnet, daß** das Kopplungselement (70) radial nach innen vorgespannt oder vorspannbar ist.

8. Bremskraftverstärker nach Anspruch 7,
**dadurch gekennzeichnet, daß** das Kopplungselement ein Spannring (70) ist.

9. Bremskraftverstärker nach einem der Ansprüche 1 bis 8,
**dadurch gekennzeichnet, daß** der Eingangskolben (28) entgegen der Betätigungsrichtung einen Anschlag (28A) für das Kopplungselement (70) aufweist.

10. Bremskraftverstärker nach einem der Ansprüche 1 bis 9,
**dadurch gekennzeichnet, daß** das Rastelement (74) eine im wesentlichen ringförmige Gestalt aufweist.

11. Bremskraftverstärker nach einem der Ansprüche 1 bis 10,
**dadurch gekennzeichnet, daß** das Rastelement (74) radial nach innen vorgespannt oder vorspannbar ist.

12. Bremskraftverstärker nach einem der Ansprüche 1 bis 11,
**dadurch gekennzeichnet, daß** für das Rastelement (74) entgegen der Betätigungsrichtung ein Anschlag (80) im Steuerventilgehäuse (22) vorgesehen ist.

13. Bremskraftverstärker nach einem der Ansprüche 1 bis 12,
**dadurch gekennzeichnet, daß** das Rastelement (74) axial verschieblich und entgegen der Betätigungsrichtung vorgespannt ist.

14. Bremskraftverstärker nach einem der Ansprüche 1 bis 13,
**dadurch gekennzeichnet, daß** die Kopplungseinrichtung (66) eine Halterung (76) umfaßt, welche radial außerhalb des Rastelementes (74) angeordnet ist.

15. Bremskraftverstärker nach Anspruch 14,
**dadurch gekennzeichnet, daß** die Halterung (76) radial innen eine Nut (76A) aufweist, in der das Rastelement (74) geführt ist.

16. Bremskraftverstärker nach einem der Ansprüche 14 oder 15,
**dadurch gekennzeichnet, daß** die Halterung (76) in axialer Richtung beweglich ist.

17. Bremskraftverstärker nach einem der Ansprüche 14 bis 16,
**dadurch gekennzeichnet, daß** die Halterung (76) entgegen der Betätigungsrichtung vorgespannt ist.

## Claims

1. A brake booster (10), comprising
- a vacuum chamber (16) and a working chamber (18) separated from each other by a movable wall (14),
- a control valve (20), which comprises a housing (22) coupled workingly to the movable wall (14) and which is capable of controlling the supply of atmospheric pressure or above-atmospheric pressure to the working chamber (18) in dependence upon the displacement of an input element (26) of the brake booster (10) to achieve a pressure difference at the movable wall (14),
- a sensing disk (30), which is disposed in an axially displaceable manner inside the control valve housing (22), and
- a coupling device (66), which introduces forces acting counter to the actuating direction of the brake booster upon the sensing disk (30) in a coupled position into the control valve housing (22) and in an uncoupled position via an actuating piston (28) into the input element (26), wherein the coupling device (66) comprises a coupling element (70) for introducing the forces acting counter to the actuating direction into the control valve housing (22) as well as an axially displaceable actuating element (72),
**characterised in that** the coupling device (66) comprises a detent element (74), which is movable in radial direction and disposed radially outside of the coupling element (70), and the coupling element (70), radially at the outside, has a stop (70B) for the detent element (74), wherein in the coupled position the forces acting counter to the actuating direction are introduced by the coupling element (70) via the stop (70B) and the detent element (74) into the control valve housing (22).

2. The brake booster according to claim 1,
**characterised in that** the coupling element (70) is movable in radial direction.

3. The brake booster according to claim 1 or 2,
**characterised in that** the actuating element (72) has sloping surfaces (72A) and cooperates with the coupling element (70) via said sloping surfaces (72A).

4. The brake booster according to claim 3,
**characterised in that** the actuating element (72) comprises a conical portion (72A) having a diameter increasing in actuating direction, and is disposed in actuating direction downstream of the coupling element (70).

5. The brake booster according to claim 3 or 4,
**characterised in that** the actuating element (72) has a stop (72B) for the coupling element (70) in the actuating direction.

6. The brake booster according to one of claims 1 to 5,
**characterised in that** the coupling element (70) is substantially annular in shape.

7. The brake booster according to one of claims 1 to 6,
**characterised in that** the coupling element (70) is preloaded or preloadable in a radial inward direction.

8. The brake booster according to claim 7,
**characterised in that** the coupling element is a clamping ring (70).

9. The brake booster according to one of claims 1 to 8,
**characterised in that**, counter to actuating direction, the input piston (28) has a stop (28A) for the coupling element (70).

10. The brake booster according to one of claims 1 to 9,
**characterised in that** the detent element (74) is substantially annular in shape.

11. The brake booster according to one of claims 1 to 10,
**characterised in that** the detent element (74) is preloaded or preloadable in a radial inward direction.

12. The brake booster according to one of claims 1 to 11,
**characterised in that** a stop (80) is provided for the detent element (74), counter to the actuating direction, in the control valve housing (22).

13. The brake booster according to one of claims 1 to 12,
**characterised in that** the detent element (74) is axially displaceable and preloaded counter to actuating direction.

14. The brake booster according to one of claims 1 to 13,
**characterised in that** the coupling device (66) comprises a holding device (76) which is disposed radially outside of the detent element (74).

15. The brake booster according to claim 14,
**characterised in that** the holding device (76) has a groove (76A) radially at the inside, in which the detent element (74) is guided.

16. The brake booster according to one of claims 14 or 15,
**characterised in that** the holding device (76) is movable in axial direction.

17. The brake booster according to one of claims 14 to 16,
**characterised in that** in the holding device (76) is preloaded counter to the actuating direction.

## Revendications

1. Servofrein (10), comportant :
- une chambre de dépression (16) et une chambre de travail (18) séparée de celle-ci par une paroi mobile (14),
- une vanne de commande (20), qui comporte un boîtier (22) couplé en transmission de force à la paroi mobile (14) et qui, pour obtenir une différence de. pression sur la paroi mobile (14), permet de commander l'amenée de pression atmosphérique ou de surpression à la chambre de travail (18) en fonction de la translation d'un élément d'entrée (26) du servofrein (10),
- un disque palpeur (30), qui est placé de manière mobile axialement à l'intérieur du boîtier de la vanne de commande (22), et
- un dispositif de couplage (66), qui, dans une position accouplée, introduit les forces s'exerçant sur le disque palpeur (30) dans le sens inverse du sens d'actionnement du servofrein dans le boîtier de la vanne de commande (22) et, dans une position découplée, les introduit par un piston d'actionnement (28) dans l'élément d'entrée (26), le dispositif de couplage (66) comportant un élément de couplage (70) pour l'introduction des forces s'exerçant dans le sens opposé au sens d'actionnement dans le boîtier de la vanne de commande (22) et un élément d'actionnement translatable axialement (72),
**caractérisé en ce que** le dispositif de couplage (66) comprend un élément d'encliquetage (74) mobile dans la direction radiale et placé radialement à l'extérieur par rapport à l'élément de couplage (70) et **en ce que** l'élément de couplage (70) possède radialement à l'extérieur une butée (70B) pour l'élément d'éncliquetage, les forces agissant en sens inverse du sens d'actionnement étant, dans la position accouplée, introduites par l'élément de couplage (70) grâce à sa butée (70B) et à l'élément d'encliquetage (74) dans le boîtier de la vanne de commande (22).

2. Servofrein selon la revendication 1,
**caractérisé en ce que** l'élément de couplage (70) est mobile dans la direction radiale.

3. Servofrein selon la revendication 1 ou 2,
**caractérisé en ce que** l'élément d'actionnement (72) comporte des surfaces inclinées (72A) et coopère par ces surfaces inclinées (72A) avec l'élément de couplage (70).

4. Servofrein selon la revendication 3,
**caractérisé en ce que** l'élément d'actionnement (72) comporte une partie conique (72A) ayant un diamètre croissant dans le sens d'actionnement et est placé, dans le sens d'actionnement, derrière l'élément de couplage (70).

5. Servofrein selon la revendication 3 ou 4,
**caractérisé en ce que** l'élément d'actionnement (72) comporte, dans le sens d'actionnement, une butée (72B) pour l'élément de couplage (70).

6. Servofrein selon l'une des revendications 1 à 5,
**caractérisé en ce que** l'élément de couplage (70) a une forme essentiellement annulaire.

7. Servofrein selon l'une des revendications 1 à 6,
**caractérisé en ce que** l'élément de couplage (70) est ou peut être précontraint radialement vets l'intérieur.

8. Servofrein selon la revendication 7,
**caractérisé en ce que** l'élément de couplage est une bague de serrage (70).

9. Servofrein selon l'une des revendications 1 à 8,
**caractérisé en ce que** le piston d'entrée (28) comporte, dans le sens opposé au sens d'actionnement, une butée (28A) pour l'élément de couplage (70).

10. Servofrein selon l'une des revendications 1 à 9,
**caractérisé en ce que** l'élément d'encliquetage (74) présente une forme essentiellement annulaire.

11. Servofrein selon l'une des revendications 1 à 10,
**caractérisé en ce que** l'élément d'encliquetage (74) est ou peut être précontraint radialement vers l'intérieur.

12. Servofrein selon l'une des revendications 1 à 11,
**caractérisé en ce qu'**il est prévu pour l'élément d'encliquetage (74), dans le sens opposé au sens d'actionnement, une butée (80) dans le boîtier de vanne de commande (22).

13. Servofrein selon l'une des revendications 1 à 12,
**caractérisé en ce que** l'élément d'encliquetage (74) est mobile axialement et précontraint dans le sens opposé au sens d'actionnement.

14. Servofrein selon l'une des revendications 1 à 13,
**caractérisé en ce que** le dispositif de couplage (66) comporte une fixation (76) placée radialement à l'extérieur de l'élément d'encliquetage (74).

15. Servofrein selon la revendication 14,
**caractérisé en ce que** la fixation (76) comporte radialement vers l'intérieur une gorge (76A) dans laquelle est guidé l'élément d'encliquetage (74).

16. Servofrein selon l'une des revendications 14 ou 15,
**caractérisé en ce que** la fixation (76) est mobile en direction axiale.

17. Servofrein selon l'une des revendications 14 à 16,
**caractérisé en ce que** la fixation (76) est précontrainte dans le sens opposé au sens d'actionnement.
